# EUROPÄISCHE PATENTANMELDUNG

(11) **EP 2 197 130 A2**
(43) Veröffentlichungstag der Anmeldung: **16.06.2010**
(21) Anmeldenummer: 09176340.9
(22) Anmeldetag: 18.11.2009
(51) Int. Cl.: H04J 3/06, H04L 12/56

(54) **Verfahren zur deterministischen Übertragung von zeitkritischen und zeitunkritischen Daten auf einem gemeinsamen Datenkanal**

(30) Priorität: 10.12.2008 EP 08171216
(71) Anmelder: Siemens Schweiz AG, 8047 Zürich (CH)
(72) Erfinder: Beutler, Tim, 8400 Winterthur (CH); Freihofer, Adrian, 8610 Uster (CH); Gelke, Hans-Joachim, 8038 Zürich (CH)
(74) Vertreter: Fischer, Michael

(57) **Zusammenfassung**

Es werden ein System und ein Verfahren zur deterministischen Übertragung von zeitkritischen und zeitunkritischen nutzdatenumfassenden Datenpaketen über einen gemeinsamen Übertragungskanal offenbart, bei denen:
a) die zeitkritischen Datenpakete durch einen ersten sie spezifizierenden Satz von Anfangs- und Endkennzeichen markiert werden;
b) die zeitunkritischen Datenpakete durch einen zweiten sie spezifizierenden Satz von Anfangs- und Endkennzeichen markiert werden;
c) die zeitkritischen und die zeitunkritischen Datenpaket auf einen Sender gemultplext;
d) mit dem Eintreffen eines zeitkritischen Datenpakets am Multiplexer und gleichzeitigem Senden eines zeitunkritischen

Datenpakets über den gemeinsamen Datenkanal das Senden des zeitunkritischen Datenpakets unter Einfügung eines ersten Trennkennzeichens unterbrochen wird und das Senden des zeitkritischen Datenpakets aufgenommen wird, wobei nach dem vollständigen Senden des zeitkritischen Datenpakets ein zweites Trennkennzeichen eingefügt und das Senden des unterbrochenen zeitunkritischen Datenpakets fortgesetzt wird.

## Beschreibung

Die vorliegende Erfindung bezieht sich auf ein Verfahren und eine Einrichtung zur deterministischen Übertragung von zeitkritischen und zeitunkritischen nutzdatenumfassenden Datenpaketen über einen gemeinsamen Übertragungskanal.

Im Eisenbahnverkehr werden für die Zuglenkung und -sicherung relevante Daten an Stellwerke übertragen bzw. von den Stellwerken an die Sicherungseinrichtungen übertragen. Hierzu verwenden die Stellwerke in der Regel proprietäre Systeme mit exklusiven Datenverbindungen, wodurch sichergestellt ist, dass zeitkritische Daten innerhalb der geforderten Zeittoleranz beim Stellwerk eintreffen bzw. von diesem an die Sicherungseinrichtungen übertragen und dort empfangen werden.

In die Eisenbahnsicherungstechnik finden nun auch vermehrt die aus der Telekommunikation bekannten Übertragungsverfahren und -einrichtungen Zugang. Dabei stellt sich ein besonderes Problem dahingehend, dass in der Telekommunikation mit der Eisenbahntechnik hinsichtlich der Übertragungsgüte nicht vergleichbare Anforderungen an die Sicherstellung der Übertragung von Daten bestehen.

Es besteht daher nun die Aufgabe, über eine physische Netzwerkverbindung mehrere logische Verbindungen zu führen. Mindestens eine dieser logischen Verbindungen ist zeitkritisch und es soll sichergestellt werden, dass Pakete aus zeitkritischen Verbindungen innerhalb einer maximal erlaubten Zeitverzögerung beim Empfänger eintreffen.

Mit den heute bekannten Telekommunikationseinrichtungen, wie ISDN, VoIP, xDSL, ATM, ATM over IP usw., kann es bei Eintreffen eines zeitkritischen Pakets am Sende sein, dass der Sender mit der Übertragung eines nicht zeitkritischen Pakets aus einer anderen logischen Verbindung beschäftigt ist. Das zeitkritische Paket muss daher warten, bis das nicht zeitkritische Paket vollständig gesendet wurde. Da Netzwerkpakete eine Mindestlänge aufweisen müssen, um normgerecht und effizient übertragen werden zu können, kann es nicht ausgeschlossen werden, dass das zeitkritische Paket lange auf die Aussendung warten muss und die erlaubte Zeitdauer überschritten wird.

Im Stand der Technik wird ein physischer Kanal daher in mehrere logische Kanäle unterteilt (Time Division Multiplexing oder Zeitschlitzverfahren, wie z.B. ISDN). Dabei wird die Bandbreite des physischen Kanals fest eingeteilt. Nachteil dieses Verfahrens ist es, dass bei nicht Ausnutzung der Bandbreite eines Kanals, die ungenutzte Bandbreite den anderen Kanälen nicht zur Verfügung steht. Dies resultiert in einer allgemeinen Bandbreitenbeschränkung. Um diese Bandbreitenbeschränkung auszugleichen, bedarf es einer generellen Erhöhung der Bandbreite.

Eine Verbesserung bieten hier die QoS-orientierten IPbasierten Übertragungsverfahren. Da bei diesen Verfahren aber auch im Vornherein über die Netzzugangssteuerung Bandbreiten und Budget für die verschiedenenen Datenklassen, wie z.B. best effort, QoS, better than best effort und dergleichen, reserviert werden müssen und Reservierung in Abhängigkeit von den bereits hinterlegten Reservierungen und der Netzauslastung abgelehnt werden können, kann auch hier nicht sichergestellt werden, dass die zeitkritischen Datenpakete im von der Eisenbahnsicherungstechnik geforderten zeitlichen Rahmen ankommen.

Der Erfindung liegt daher die Aufgabe zugrunde, ein Verfahren und eine Einrichtung zum Übertragen von zeitkritischen und zeitunkritischen Datenpaketen anzugeben, die es erlauben, zeitkritische Pakete innerhalb einer deterministischen Zeit über das Netzwerk zu senden, während gleichzeitig auf dem Netzwerk nicht zeitkritische Signale übertragen werden können. Die vorhandenen zeitunkritischen Pakete sollen dabei die zeitkritischen Pakete nicht verzögern. Die Bandbreite des physischen Übertragungskanals soll dabei immer optimal ausgenutzt werden, auch wenn auf dem logischen zeitkritischen Kanal keine zeitkritischen Daten zu übertragen sind.

Diese Aufgabe wird bezüglich des Verfahrens erfindungsgemäss durch ein Verfahren zur deterministischen Übertragung von zeitkritischen und zeitunkritischen nutzdatenumfassenden Datenpaketen über einen gemeinsamen Übertragungskanal gelöst, bei dem:
a) die zeitkritischen Datenpakete durch einen ersten sie spezifizierenden Satz von Anfangs- und Endkennzeichen markiert werden;
b) die zeitunkritischen Datenpakete durch einen zweiten sie spezifizierenden Satz von Anfangs- und Endkennzeichen markiert werden;
c) die zeitkritischen und die zeitunkritischen Datenpaket auf einen Sender gemultplext;
d) mit dem Eintreffen eines zeitkritischen Datenpakets am Multiplexer und gleichzeitigem Senden eines zeitunkritischen Datenpakets über den gemeinsamen Datenkanal das Senden des zeitunkritischen Datenpakets unter Einfügung eines ersten Trennkennzeichens unterbrochen wird und das Senden des zeitkritischen Datenpakets aufgenommen wird, wobei nach dem vollständigen Senden des zeitkritischen Datenpakets ein zweites Trennkennzeichen eingefügt und das Senden des unterbrochenen zeitunkritischen Datenpakets fortgesetzt wird.

Auf diese Weise ermöglicht es das Verfahren zeitkritische Pakete innerhalb einer deterministischen Zeit über das Netzwerk zu senden, während gleichzeitig auf dem Netzwerk nicht zeitkritische Signale übertragen werden können. Die vorhandenen zeitunkritischen Pakete verzögern dabei die zeitkritischen Pakete nicht. Die Bandbreite des physischen Übertragungskanals wird dabei immer optimal ausgenutzt, auch wenn auf dem logischen zeitkritischen Kanal keine zeitkritischen Daten zu übertragen sind.

Eine vorteilhafte Ausgestaltung der Erfindung sieht es vor, dass das erste und das zweite Trennkennzeichen mittels eines am Anfang und am Ende des ersten und zweiten Trennkennzeichens eingefügten Datenflag von den Nutzdaten unterschieden werden. Somit können Nutzdaten und Trennkennzeichen eindeutig und schnell unterschieden werden.

Eine weitere vorteilhafte Ausgestaltung der Erfindung sieht es vor, dass das Anfangs- und das Endkennzeichen im ersten und zweiten Satz mittels eines am Anfang und am Ende des Anfangs- und Endkennzeichens eingefügten Datenflags von den Nutzdaten unterschieden werden. Somit können Nutzdaten und Anfangs- und Endkennzeichen eindeutig und schnell unterschieden werden.

In weiter vorteilhafter Ausgestaltung der Erfindung können das erste und das zweite Trennkennzeichen und die Anfangs- und Endkennzeichen sequentiell im gemeinsamen Datenkanal übertragen werden.

Zur Datenpufferung kann sender- wie empfängerseitig ein Datenpufferung vorgesehen sein. Dabei können senderseitig für die zeitkritischen Datenpakete und die zeitunkritischen Datenpakete jeweils eigene Sendequeues bereitgestellt werden.

Ein erfindungsgemässes System umfasst die Komponenten zur Umsetzung eines Verfahrens nach einem der Ansprüche 1 bis 5. Ein derartiges System wird beispielsweise im Rahmen der Figurenbeschreibung näher erläutert.

Diese Ausführungsbeispiele werden anhand einer Zeichnung näher erläutert. Dabei zeigt die:
- Figur 1: schematisch die logische Übertragungsfolge von zeitkritischen und zeitunkritischen Datenpaketen; und
- Figur 2: ein Blockdiagramm der Sende- und der Empfangsseite mit Sende- und Empfangsqueues.

Gemäss der vorliegenden Erfindung werden zeitkritische Pakete RT und zeitunkritische Pakete NRT auf einem gemeinsamen Datenkanal DSL mit Steuerzeichen RT Start, RT End, NRT Start, NRT End, NRT Break und NRT Continue voneinander getrennt übertragen. Steht zum Zeitpunkt einer zeitunkritischen Paketübertragung, ein zeitkritisches Signal zur Übertragung an, wird das zeitunkritische Datenpaket sofort unterbrochen und das Steuersignal NRT Break in den Datenstrom eingefügt. Anhand des Steuersignals kann der Empfänger die Pakete voneinander unterscheiden. Damit der Datenstrom beim Segmentieren der Pakete nicht abreisst, werden auf Sender und Empfängerseite die Daten in einem Buffer zwischengespeichert.

Vorteile:
- Liegen keine zeitkritischen Pakete zur Übertragung an, steht die volle Bandbreite den zeitunkritischen Kanälen zur Verfügung, es geht dadurch keine Bandbreite verloren.
- Es ist kein komplexer Header notwendig, um die Pakete zu fragmentieren.
- Der Overhead durch Steuerzeichen kann auf wenige Bits reduziert werden, es entsteht wenig Bandbreitenverlust durch die Unterteilung der Frames.
- Das Verfahren ist transparent zu den zu übertragenden Frames
- Die Latenzzeit zum Umschalten der logischen Kanäle ist sehr gering.
- Das Verfahren ist sicher, da das ursprüngliche Paket, einschliesslich Header und CRC, nicht verändert werden müssen.

Bisher mussten beim Übertragen von zeitkritischen Daten RT zusammen mit anderen Daten feste Zeitschlitze oder Bandbreiten reserviert werden, die für die anderen logischen Kanäle verloren gingen, wenn dieser Kanal momentan nicht gebraucht wurde. Durch das neue Verfahren kann die Bandbreite ganz ausgenutzt werden, auch wenn keine zeitkritischen Daten RT zu übertragen sind. Zeitkritische Signale können so gemeinsam mit zeitunkritischen Signalen ohne Bandbreitenverluste auf einem gemeinsamen Medium übertragen werden.

Das System zum Übertragen von Datenpaketen aus mehreren Kanälen umfasst daher einen einzigen physikalischen Kanal DSL. Im Sender werden die logischen Kanäle mittels eines Multiplexers und entsprechender Multiplexer-Steuerung zusammengefügt. Im Empfänger werden die Datenpakete wieder in die logischen Kanäle separiert. Die Datenverbindung ist vorliegend eine Punkt-zu-Punkt-Verbindung. Die zeitkritischen Datenpakete RT werden nicht von den zeitunkritischen Signalen verzögert, weil zeitkritische Datenpakete RT die Sendung von zeitunkritischen Datenpakete NRT unterbrechen. Dabei ist der Punkt, an dem das zeitunkritische Datenpaket NRT unterbrochen werden kann, nicht von Paketsegmenten abhängig. Zeitkritische und zeitunkritische Datenpakete RT bzw. NRT sind durch die Steuerkommandos logisch voneinander getrennt. Datenpakete und Steuerkommandos werden sequentiell im gleichen physikalischen Datenkanal DSL übertragen. Beginn und Ende eines Pakets werden durch "Beginn"-Kommandos START RT, START NRT und "End"-Kommandos END RT, END NRT signalisiert. Die zeitunkritischen Datenpakete NRT können mit Hilfe der eingefügten Steuerkommandos NRT Break an einer beliebigen Stelle auseinander gebrochen werden. Steuerkommandos werden von Datenkommandos mit Hilfe von Flags, welche sich am Anfang und am Ende der Steuerkommandos befinden, unterschieden. Die Empfänger- und Senderseite verfügen über einen Speicher, der Pakete bei momentan nicht zur Verfügung stehendem Übertragungskanal zwischenspeichern.

Eine Anwendung für die deterministische Datenübertragung ist das Übertragungsnetzwerk für ein Eisenbahnsicherungssystem , beispielsweise SiNet® der Siemens Schweiz AG. Beim SiNet müssen zeitkritische Daten, im folgenden Realtime-Daten RT genannt und zeitunkritische Daten, im folgenden Non-Realtime Daten NRT genannt, auf einer SHDSL Verbindung DSL übertragen werden. Da die RT-Daten auf Grund des Cycly-Protokolls zeitkritisch sind, sollen diese mit möglichst wenig Verzögerung das Netzwerk DSL durchlaufen. NRT-Frames sind dagegen weniger zeitkritisch. Damit man RT-Frames mit höherer Priorität als NRT-Frames auf das Netzwerk übertragen kann, trennt man mit der Segmentierung beide voneinander ab. Somit werden aus einem SHDSL Kanal zwei logische Kanäle gebildet. Ein logischer Kanal überträgt die RT-Frames, der andere die NRT-Frames.

Zudem können die bis zu 1520 Byte langen NRT-Frames von RT-Frames unterbrochen werden. Da RT-Frames die höhere Priorität haben, werden diese ohne Unterbrechung übertragen. RT- und NRT-Pakete werden mit Kommandos voneinander getrennt. Ein Datenpaket wird jeweils mit zwei Kommandos umschlossen.

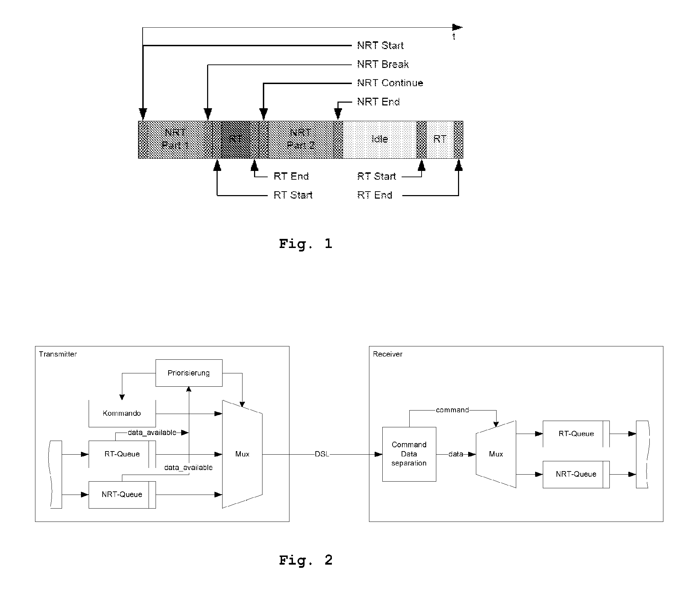

Abbildung 1 zeigt RT- und NRT-Pakete die von den entsprechenden Kommandos umschlossen sind. Ein Kommandowort beginnt mit einer Null und darauf folgend 9-Einsen. Damit der Empfänger Kommandos von Daten unterscheiden kann, wird nach 8 Einsen im Datenstrom immer eine Null eingefügt (Bit-Stopfen). Der Empfänger entfernt diese zusätzliche 0 wieder.

**Tabelle 1: Kodierung der Kommandos**

| **Kodierung** | **Kommando** |
|---|---|
| 0b011111111100000 | RT Start |
| 0b011111111100001 | NRT Start |
| 0b011111111100010 | RT End |
| 0b011111111100011 | NRT End |
| 0b011111111100100 | NRT Break |
| 0b011111111100101 | NRT Continue |

Die Tabelle 1 zeigt eine entsprechende Kodierung der Anfangs- und Endzeichen sowie des ersten und zweiten Trennungszeichens.

Da es vorkommen kann, das NRT-Frames mit dem Aussenden auf das Netzwerk DSL warten müssen, bis ein RT-Frame komplett versendet ist oder ein RT-Frame ankommt, während ein NRT-Paket versendet wird, benötigt es für beide Kanäle eine Sende-Queue. Auf der Empfängerseite werden die NRT-Pakete und RT-Pakete in ihren Empfangs-Queues wieder zusammengesetzt. Die Abbildung 2 zeigt dementsprechend ein Blockdiagramm der Segmentierung mit Sende- und Empfangs-Queues.

## Patentansprüche

1. Verfahren zur deterministischen Übertragung von zeitkritischen und zeitunkritischen nutzdatenumfassenden Datenpaketen über einen gemeinsamen Übertragungskanal, bei dem:
a) die zeitkritischen Datenpakete durch einen ersten sie spezifizierenden Satz von Anfangs- und Endkennzeichen markiert werden;
b) die zeitunkritischen Datenpakete durch einen zweiten sie spezifizierenden Satz von Anfangs- und Endkennzeichen markiert werden;
c) die zeitkritischen und die zeitunkritischen Datenpaket auf einen Sender gemultplext;
d) mit dem Eintreffen eines zeitkritischen Datenpakets am Multiplexer und gleichzeitigem Senden eines zeitunkritischen Datenpakets über den gemeinsamen Datenkanal das Senden des zeitunkritischen Datenpakets unter Einfügung eines ersten Trennkennzeichens unterbrochen wird und das Senden des zeitkritischen Datenpakets aufgenommen wird, wobei nach dem vollständigen Senden des zeitkritischen Datenpakets ein zweites Trennkennzeichen eingefügt und das Senden des unterbrochenen zeitunkritischen Datenpakets fortgesetzt wird.

2. Verfahren nach Anspruch 1, wobei das erste und das zweite Trennkennzeichen mittels eines am Anfang und am Ende des ersten und zweiten Trennkennzeichens eingefügten Datenflag von den Nutzdaten unterschieden werden.

3. Verfahren nach Anspruch 1 oder 2, wobei das Anfangs- und das Endkennzeichen im ersten und zweiten Satz mittels eines am Anfang und am Ende des Anfangs- und Endkennzeichens eingefügten Datenflags von den Nutzdaten unterschieden werden.

4. Verfahren nach Ansprüche 2 oder 3, wobei das erste und das zweite Trennkennzeichen und die Anfangs- und Endkennzeichen sequentiell im gemeinsamen Datenkanal übertragen werden.

5. Verfahren nach einem Ansprüche 1 bis 4, wobei für die zeitkritischen Datenpakete und die zeitunkritischen Datenpakete jeweils eine Sendequeue bereitgestellt wird.

6. System mit den Komponenten zur Umsetzung eines Verfahrens nach einem der Ansprüche 1 bis 5.
